# EUROPEAN PATENT SPECIFICATION

(11) **EP 4 541 627 B1**
(45) Date of publication and mention of the grant of the patent: **25.11.2026**
(21) Application number: 23204942.9
(22) Date of filing: 20.10.2023
(51) Int. Cl.: B60K 15/05, B60L 53/16

(54) **A CHARGE PORT COVER ARRANGEMENT**
LADEANSCHLUSSABDECKUNGSANORDNUNG
AGENCEMENT DE COUVERCLE DE PORT DE CHARGE

(43) Date of publication of application: 23.04.2025
(73) Proprietor: Polestar Performance AB, 405 31 Gothenburg (SE)
(72) Inventor: ROSE, Dominic, Warwickshire, CV34 4QH (GB); MARTIN, Felipe, Solihull, B90 1PB (GB)
(74) Representative: Zacco Sweden AB

(56) References cited:
- CN-A- 115 402 428
- DE-A1- 102011 076 927
- JP-A- 2022 549 659
- US-A1- 2017 197 515
- US-A1- 2019 111 795
- US-A1- 2020 324 646

## Description

### TECHNICAL FIELD

The present disclosure relates to a charge port cover arrangement for a vehicle and a vehicle comprising such a charge port cover arrangement.

### BACKGROUND

Charge port covers serve as protective barriers for charge ports. Charge port covers are designed to shield the charge port from dust, dirt, moisture and other particle that may damage the charge port. In other words, a charge port cover helps to protect a charge port when the charge port is not in use.

Conventionally, electric vehicles comprise charge ports of various types. For example there are charge ports attached via hinges to the body of the electric vehicle. These can be alternated between an open and closed position by different types of locking mechanisms. Such charge ports are opened in and closed in a door-like manner conventionally.

Some electric vehicles comprise charge port covers that are electrically controlled e.g., by an actuation unit. Such electrically controlled charge port covers can be alternated between an open and a closed position by a switch.

A common disadvantage of electrically controlled charge port covers of the present art is that they usually comprise an excessive amount of components resulting in that they are bulky in design and expensive to manufacture. Another disadvantage of such charge port covers is that they protrude outwardly relative the vehicle body once opened, thereby being bulky, aesthetically unpleasing and more vulnerable once at said opened state.

CN115402428 A discloses a split sliding type cover plate of an automobile power supply port, which covers or is embedded in a cover plate hole corresponding to the power supply port on an automobile body metal plate, the split sliding type cover plate comprises a split cover plate, a base and a driving device arranged in parallel, the driving device is arranged between the base and the split cover plate, the split cover plate consists of a plurality of small cover plates, and the small cover plates are arranged on the base. When the cover plate is opened, the driving device drives the walking shaft through the lead screw sliding block mechanism to drive the small cover plate to slide outwards synchronously or move towards the interior of the vehicle body from the inner edge of the cover plate hole and is opened outwards till the power supply opening is completely exposed.

Based on the above, there is room for charge port covers for electric vehicles to explore the domain of charge port covers to provide an electric charge port cover that is improved in its functional design in a manner that allows it to have fewer components and be more compact compared to existing electric charge port covers.

Accordingly, it would be desirable to provide a charge port cover that is improved in its functional design to address requirements related to at least one of compactness and manufacturing convenience.

### SUMMARY

It is therefore an object of the present disclosure to alleviate at least some of the mentioned drawbacks to provide a charge port cover arrangement that is improved in compactness and manufacturing convenience. Further, the disclosure provides a charge port cover arrangement that is mechanically less complex than the previous art. Further, the disclosure provides an electric vehicle comprising such a charge port cover arrangement. This object is achieved by means of a charge port cover arrangement and a vehicle as defined in the appended claims. The present disclosure is at least partly based on the insight that by providing a charge port cover arrangement having a plurality of charge port blades that can move from one state to another by a translating and a transformation movement the charge port cover arrangement can at least be more compact compared to conventional charge port cover arrangements.

The present disclosure relates to a charge port cover arrangement for a vehicle (preferably an electric vehicle) comprising a control assembly comprising an actuation unit. Further, the charge port cover arrangement comprises a plurality of charge port blades, preferably four. The charge port cover arrangement is arranged to alternate between a closed state in which said charge port blades form a common perimeter/circle coincident with a first plane (which may also be referred to as a reference plane or a reference circle). Further, the plurality of charge port blades are arranged to jointly cover a charge port opening of said vehicle in said closed state. Accordingly, an axial extension of the charge port may be the same as the axial extension of the common perimeter i.e the charge port and the common perimeter may be coaxial.. Further, at an open state, the charge port blades are arranged to expose said charge port opening of said vehicle to an environment. Further, the control assembly is operably coupled to the plurality of charge port blades and configured to, in response to actuation of said actuation unit: move the plurality of blades from one of said states to the other state by a translating movement, and a transformation movement performed at least partly in a sequence, wherein said translating movement is arranged to move the charge port blades in a direction perpendicular to said first plane (i.e. along an axis which is perpendicular to said first plane). The transformation movement moves the charge port blades away from each other, or towards each other until they form a common circle that covers the charge port of the vehicle.

An advantage of the charge port cover arrangement of the present disclosure is that as it performs both a transformation and translating movement which allows the charge port blades to at least in the open state be more compactly arranged.

The actuation unit may be a single actuation unit having a single power source. In other words, a common actuation unit may, by the control assembly, alternate the blades between the open and closed state. The single actuation unit may also be referred to as common actuation unit or single motor actuation unit or one-motor actuation unit. Accordingly, the charge port cover arrangement may utilize a single actuation unit for alternating the charge port cover arrangement between said open and closed state. In other words, the actuation unit may rotate in different directions depending on whether it is going to alternate the charge port cover arrangement from a closed state to an open state or vice versa.

An advantage of this is a more energy efficient and non-complex charge port cover arrangement as it can rely on a single actuation unit.

The control assembly comprises a helix rod arranged to be rotated by said actuation unit for enabling said translating movement, said helix rod having an axial extension being parallel with a normal axis of said first plane. Accordingly, the helix rod enables the charge port blades to be moved in a translating manner, preferably, if they are flush with the vehicle body at said closed state, the helix rod is arranged to move the charge port blades towards a vehicle center line.

Advantageously, the helix rod provides an effective way of providing a translating movement.

Further, the control assembly may comprise a gear arranged to be driven by said actuation unit, the gear being connected to each of said plurality of charge port blades, wherein said gear is arranged to enable said transformation movement of the blades. The blades may be circularly distributed along a gear surface.

An advantage of this is that a single gear can move each charge port blade, thereby minimizing the amount of components of said charge port cover arrangement.

Further, the charge port cover arrangement may comprise a plurality of linkages. Each linkage being operably connected between a corresponding charge port blade of said plurality of charge port blades and said actuation unit, preferably each linkage is hingedly/via pivots attached to said corresponding charge port blade such that it can rotate about its attachment point to the blade and/or rotate about its attachment point to the gear.

Each linkage may be connected at one of its ends to said gear and at the other of its ends to a corresponding charge port blade, thereby movement of the gear causes the plurality of blades to move. Accordingly, an axial extension of the gear may be extending in parallel to the axial extension of the charge port. Thus, rotation of the gear may produce an axial displacement of the charge port blades.The gear may rotate about its center axis. A single gear, configured to be moved by the actuating unit, may cause all blades to move. Thereby, enabling a compact and efficient means for moving a plurality of charge port blades.

The control assembly may comprise a frame parallel to said first plane, the frame being connected to said plurality of blades. The frame defining an opening arranged to be coaxial with said charge port opening. Further, the frame may comprise a plurality of guiding tracks each guiding track being arranged to guide a corresponding blade away from or towards each other along the guiding tracks during said transformation movement, each guiding track may extend planarly.

The guiding tracks provide the advantage of allowing for a compact yet efficient manner of moving the charge port blade to and away from each other. Each guiding track may form a path/trajectory for guiding a corresponding blade in a pre-defined manner.

The aforementioned frame may be operably connected to said helix rod, wherein rotation of said helix rod causes the frame to be driven along guide means of said helix rod, thereby enabling said translating movement of said charge port blades. The guide means may be grooves (e.g. worm grooves) or threads. The frame may comprise a rod opening arranged to enclose the helix rod, such that engagement of the helix rod and said rod opening allows the frame to be moved according to said translating movement. Further, the helix rod may be operably coupled to a guide pin which is configured to transmit torque of the helix rod to move the frame (thereby providing the translating movement). Accordingly, when the helix rod rotates, it causes the guide pin to move along its helical path thereby forcing the frame to move in said translating movement.

Each guiding track may be arc shaped and form a trajectory extending radially outwards from said opening. An advantage of said arc shaped tracks is that it enables each track to fulfil its purpose of guiding a blade while maintaining a compact shape of the arrangement.

The frame may further comprise a plurality of neutral tracks, each neutral track extending into a corresponding guiding track (forming a plurality of common guiding tracks each common guiding track having a neutral part). Each neutral track may extend (at least when viewed from a front) along, follow or be associated with an outer perimeter of a corresponding charge port blade when said charge port cover arrangement is in said closed state. Each blade may be arranged to, when alternating from a closed to an open state, be guided along/from a corresponding neutral track to said guiding track, and when alternating from an open state to a closed state be guided from said guiding track through to said neutral track. Each neutral track may be configured to guide the blades without allowing the blades to move away from each other or closer to each other. Therefore, being referred to as a neutral track.

Accordingly, the neutral tracks may be configured to jointly rotate the blades (while closed) about its own axle (of the common perimeter) to let the translating movement to be performed simultaneously, thereby avoiding the blades from being moved away from each other before they are moved to the inwards of the vehicle. Hence, allowing the blades to be moved away from each other only once they are situated at a position that does not risk them to collide with the vehicle outer body. In other words, the neutral track may enable the translating movement and the transformation movement to be performed in a sequence as the neutral tracks are arranged to guide the blades without moving them away or towards each other depending on the direction of torque applied by the actuation unit.

The plurality of charge port blades may be four charge port blades each forming a quarter of a circle, wherein at said closed state the four charge port blades jointly form said common perimeter, said common perimeter being circular. The charge port blades may be less or more than four. Further, the charge port blades may form other shapes.

Each blade may comprise a mating protrusion and a mating cavity, wherein at said closed state, each mating protrusion of each blade is mated with a corresponding cavity of another blade of said plurality of blades to aid alignment.

An advantage of this is that it allows the blades be closed to form said perimeter even though there may be some tolerance variations provided by the control assembly and/or blades. The protrusion-cavity pairs allow the blades to reach their intended positions even though such tolerances may exist.

In some aspects, the arrangement is arranged to when transitioning from said closed state to said open state, perform the translating movement prior to the transformation movement, and when transitioning from said open state to said closed state, perform the transformation movement prior to said translation movement.

An advantage of this is that it allows the blades to flush with the outer surface of the vehicle exterior body in said closed position. Thereby, the movements ensure that the blades do not collide with the vehicle exterior body. Even though it may be advantageous to flush the blades with the outer surface of the vehicle exterior body, it is not necessarily needed.

The charge port cover arrangement may further comprise control circuitry (which may be the electric control unit, ECU, of the vehicle) configured to: receive an opening or closing command from e.g. a user and alternate, in response to said command, said charge port cover arrangement from one of said states to the other.

The user command may be inputted at an infotainment system of said vehicle or any other electronic device in communication with said vehicle or any other suitable input medium of said vehicle. In some aspects, the user command may be human-gesture based.

There is also provided a vehicle, preferably an electric vehicle, comprising a charge port, an exterior body defining a charge port opening extending to said charge port, wherein the exterior body comprises an outer surface and an inner surface. The vehicle comprising the charge port cover arrangement according to any aspects herein. Further, in said closed state, the plurality of blades are flush with said outer surface of the exterior and in said open state, the plurality of blades are adjacent said inner surface of the exterior body.

### BRIEF DESCRIPTION OF THE DRAWINGS

These and other features and advantages of the present disclosure will now be further clarified and described in more detail, with reference to the appended drawings;
- Figure 1: illustrates a front view of a charge port cover arrangement in a closed state in accordance with aspects of the present disclosure;
- Figure 2A-B: illustrates objective views of a charge port cover arrangement in a closed state in accordance with aspects of the present disclosure;
- Figure 3: illustrates a front view of a charge port cover arrangement moving to an open state in accordance with aspects of the present disclosure;
- Figure 4: illustrates a front view of a charge port cover arrangement in a closed state and a cut-out enlarged view A of a part of said charge port cover arrangement;
- Figure 5: illustrates a front view of a charge port cover arrangement transitioning from a closed state to an open state during a time period in accordance with aspects of the present disclosure;
- Figure 6: illustrates an objective view of a charge port cover arrangement transitioning from a closed state to an open state during a time period in accordance with aspects of the present disclosure;
- Figure 7: illustrates an objective view of a charge port cover arrangement transitioning from an open state to a closed state during a time period in accordance with aspects of the present disclosure;
- Figure 8A-8C: illustrates side views of a charge port cover arrangement in accordance with aspects herein;
- Figure 9A: illustrates schematically a top view of a vehicle comprising a charge port cover arrangement in accordance with aspects herein; and
- Figure 9B: illustrates schematically a side view of a vehicle comprising a charge port cover arrangement in accordance with aspects herein.

### DETAILED DESCRIPTION

In the following detailed description, some embodiments of the present disclosure will be described.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and Band C, A and B, Band C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV. Further, the term "electric vehicle" may refer to a plug-in hybrid vehicle, also referred to as a PHEV. Further, the term "electric vehicle" may refer to a hybrid vehicle, also referred to as a HEV, where a hybrid vehicle refers to a vehicle utilizing multiple propulsion sources one of which is an electric drive system.

The term "at least partly in a sequence" may refer to that at least one of the translating movement and the transformation movement is initiated before the other. Accordingly, they may be fully in a sequence such that e.g. when alternating from an open to a closed position the translating movement is followed by the end of said transformation movement, or partially in a sequence such that the transformation movement is firstly initiated alone, then at some point it is performed simultaneously as the translating movement.

The term "gear" may refer to a crown gear, a ring gear, bevel gear or any other suitable gear type.

The term "actuation unit" may refer to a motor, e.g. an electric motor or combined motor and ECU. The actuation unit may provide a rotating movement so to be a rotary actuation unit. The actuation unit may comprise an output shaft.

The term "charge port opening" may refer to an opening, usually provided through an exterior body (preferably quarter panel) of the vehicle. The charge port opening giving access to a charge port of the vehicle.

The term "flush" may refer to that two surfaces are even/level so that they form a common plane.

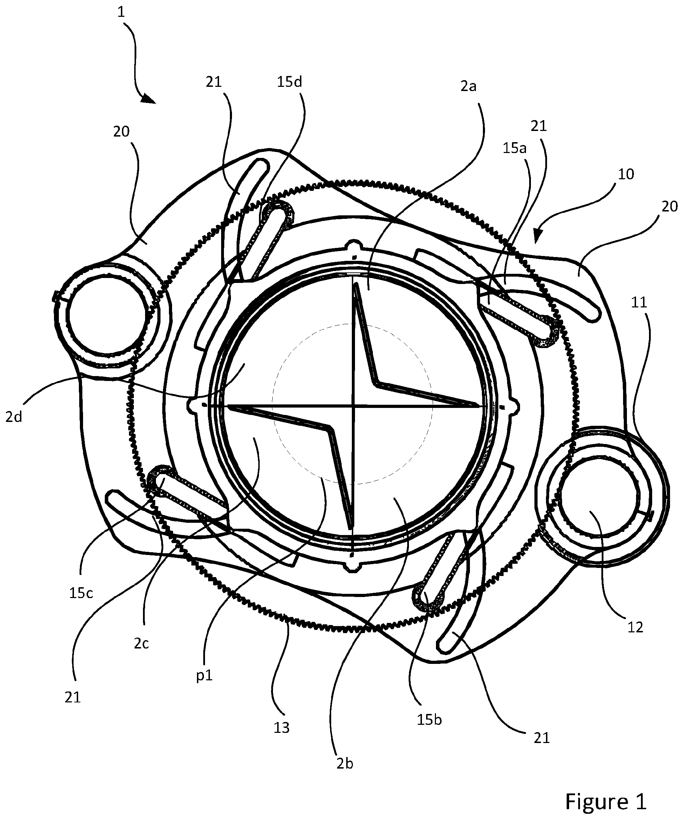

Figure 1 illustrates a front view of a charge port cover arrangement 1 for a vehicle comprising a control assembly 10 comprising an actuation unit 11. Further, comprising a plurality of charge port blades 2a, 2b, 2c, 2d. The charge port cover arrangement 1 is arranged to alternate between a closed state and an open state. The closed state being illustrated in Figure 1 showing that the charge port blades 2a, 2b, 2c, 2d form a common perimeter coincident/intersecting with a first plane p1. Specifically, an outer surface of the charge port blades 2a-2d may form the common perimeter coincident with said first plane/reference circle p1. In said closed state, each blade may be in contact with at least another blade 2a-2d as shown in Figure 1. The first plane p1 being circular in Figure 1. The plurality of charge port blades 2a, 2b, 2c, 2d are arranged to jointly cover a charge port opening of said vehicle in said closed state. In the open state, said charge port blades 2a, 2b, 2c, 2d are arranged to expose said charge port opening of said vehicle to an environment. Accordingly, in said open state, the charge port is accessible to a user and is visible from an exterior of the vehicle. In said closed state (as shown in Figure 1), the charge port is not accessible to a user and is not visible from an exterior of the vehicle. Further, the control assembly 10 is operably coupled to the plurality of charge port blades 2a, 2b, 2c, 2d. The control assembly 10 is configured to, in response to actuation/activation of said actuation unit 11, move the plurality of blades 2a, 2b, 2c, 2d from one of said states to the other state by a translating movement, and a transformation movement performed at least partly in a sequence. The translating movement is arranged to move the charge port blades 2a, 2b, 2c, 2d in a direction perpendicular to said first plane p1, wherein said transformation movement moves the charge port blades 2a, 2b, 2c, 2d away from each other or towards each other.

Figure 1 illustrates that the control assembly 10 may comprise a plurality of linkages 15a, 15b, 15c, 15d, each linkage being operably connected between a corresponding charge port blade of said plurality of charge port blades 2a, 2b, 2c, 2d and said actuation unit. Figure 1 shows that each linkage 15a, 15b, 15c, 15d is attached via a rotating pivot to said corresponding charge port blade 2a, 2b, 2c, 2d.

Further, Figure 1 illustrates that each linkage 15a, 15b, 15c, 15d is connected at one end to said gear 13 and at another end to a corresponding charge port blade 2a, 2b, 2c, 2d, thereby movement of the gear 13 causes the plurality of blades 2a-2d to move.

In some aspects, the charge port cover arrangement 1 is attached to the vehicle by means of a connection between the actuating unit 11 and a part of the vehicle interior.

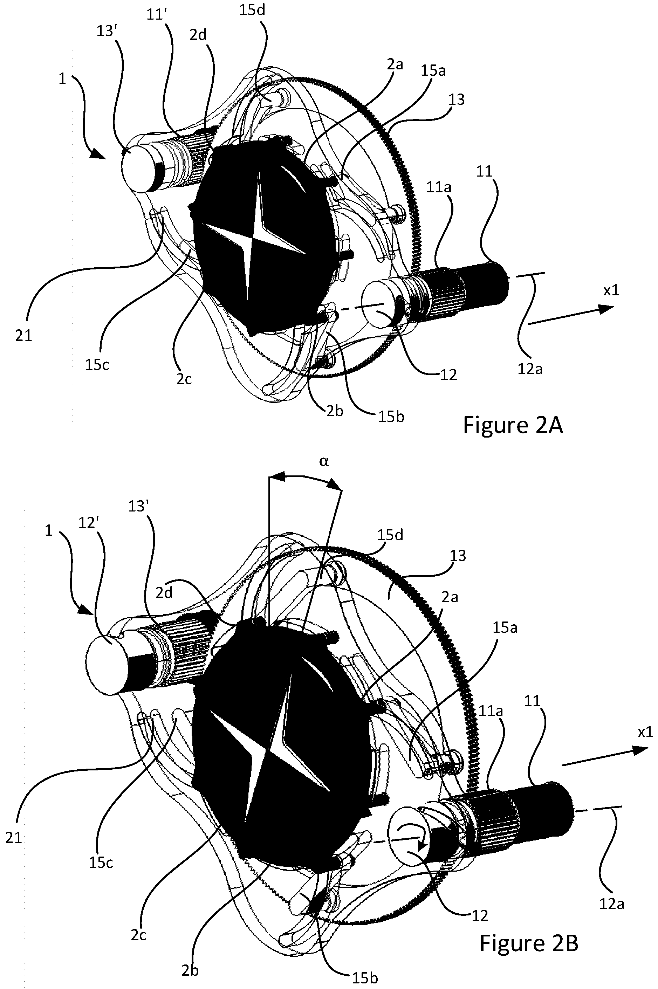

Figures 2A-2B illustrates an objective view of a charge port cover arrangement 1. Figures 2A-2B illustrate that the actuating unit 11 may be a rotary actuating unit having teeth 11a at an output shaft thereof. The teeth 11a may, as illustrated in Figures 2A-2B be operable with the teeth of said gear 13 such that upon rotation of the actuating unit 11, the gear 13 also rotates. Accordingly, as the gear in Figures 2A-2B is connected to linkages 15a-15d, the gear 13 moves the charge port blades 2a-2d.

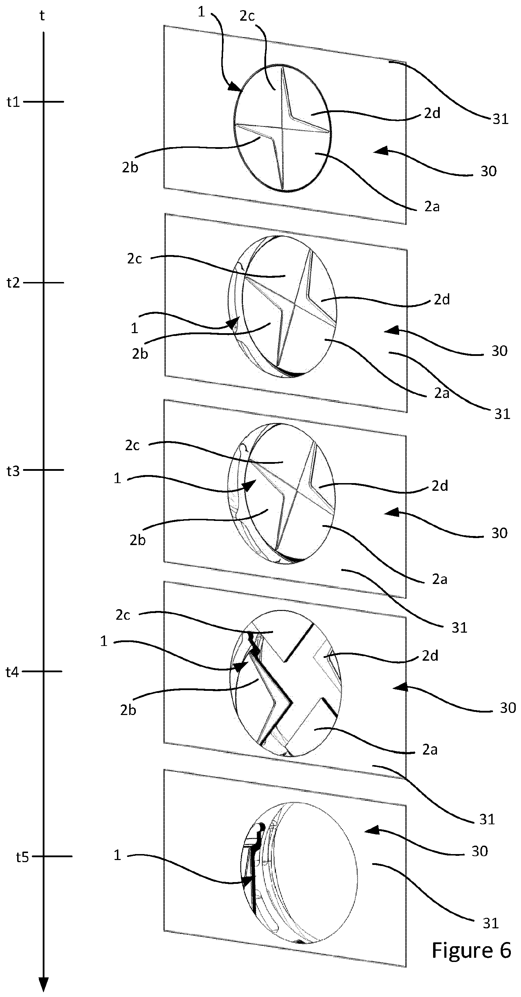

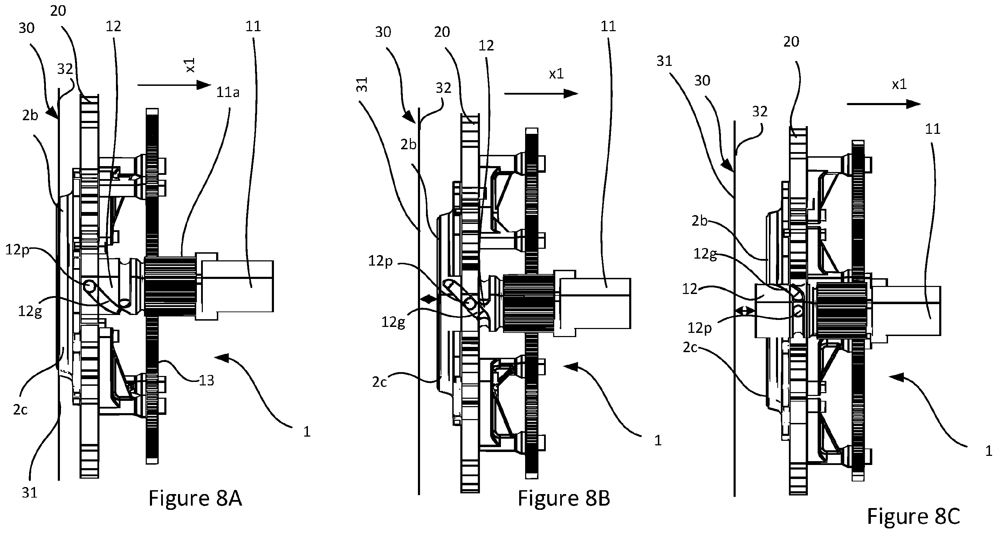

Figure 2A-2B further illustrates that the control assembly may comprise a helix rod 12 arranged to be rotated by said actuation unit 11 for enabling said translating movement, said helix rod 12 having an axial extension/extension axis 12a being parallel with a normal axis of said first plane p1 (which is shown in Figure 1). Accordingly, the blades 2a-2d may, by the helix rod 12, be moved along the axial extension 12a of the helix rod 12 so that the blades move in a direction perpendicular to said first plane p1 (along a first axis x1 seen in Figure 8A-C) shown in Figure 1. Accordingly, in said closed state, the blades 2a-2d intersect with said first plane p1 and the translating movement causes the blades to move away from said first plane p1 in a direction perpendicular to said first plane (while forming said common perimeter). Figure 2A illustrates a position in which the helix rod 12 has not been rotated by the actuating unit 11. In Figure 2B, the helix rod 12 has been rotated which has caused the blades 2a-2d to move an angle of α while also being moved in a translating movement along the axial extension 12a. The translating movement is further illustrated in Figures 6-8C which will be elaborated upon further in the present disclosure.

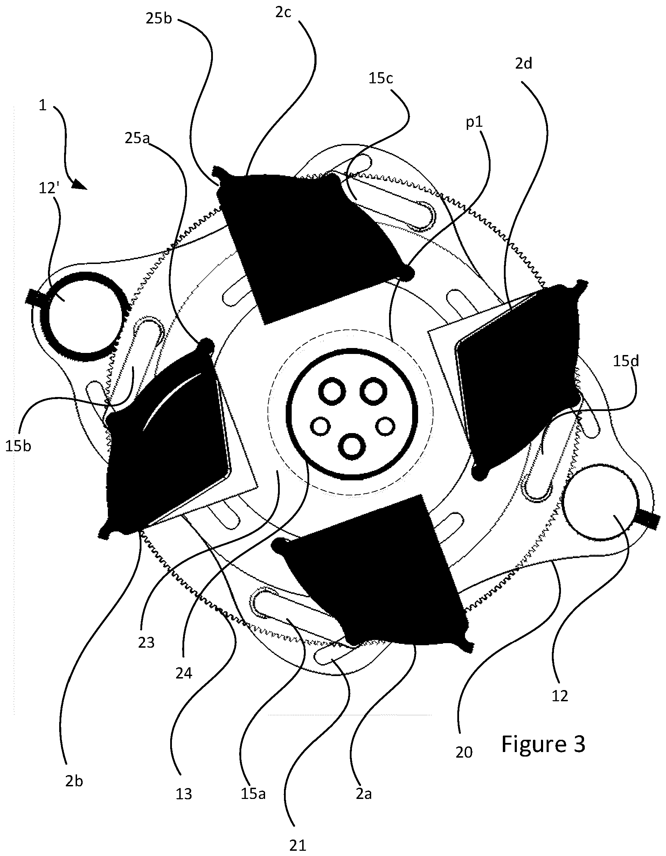

Figure 3 illustrates a front view of a charge port cover arrangement 1 while being moved from a closed to an open position in accordance with aspects herein. Figure 3 illustrates that said control assembly 10 may comprises a frame 20 parallel to said first plane p1, the frame 20 being connected to said plurality of blades 2a, 2b, 2c, 2d. Further Figure 3 illustrates that the frame 20 defines an opening 23 arranged to be coaxial with said charge port opening 23. Further, Figure 3 illustrates that the frame 20 may comprise a plurality of guiding tracks 21 each guiding track 21 being arranged to, during said transformation movement, guide a corresponding blade 2a, 2b, 2c, 2d, along a path formed by each guiding track 21, to jointly guide the blades 2a-2d away from or towards each other depending on if the charge port cover arrangement is going to open or close. Each guiding track 21 may extend planarly so to be parallel with said plane p1. The tracks 21 may all have a common design/configuration to allow each blade 2a-2d to be guided along a common route but in different directions.

As illustrated in Figures 2A-3, the frame 20 may be operably connected to said helix rod 12, wherein rotation of said helix rod 12 causes the frame to be driven (axially along said first axis x1) along guide means of said helix rod, thereby enabling said translating movement of said charge port blades 2a, 2b, 2c, 2d. Figures 2A-3 illustrates that the helix rod 12 may extend from the rotary actuating unit 11. Accordingly, as shown in Figure 2, the rotary actuating unit 11 may rotate both the helix rod 12 and teeth 11a. Further, Figure 3 illustrates that the blades 2a-2d have moved through a part of the trajectory of the tracks 21, thereby the charge port cover arrangement 1 being near an open state. Each guiding track 21 may be arc shaped and extend radially outwards from/relative the opening of the frame 20, thereby radially diverging from the opening. Further, as illustrated in Figure 3, the helix rod 12 may be extending through the frame 20, such that rotation of the helix rod 12 by the actuating unit 11 causes the frame 20 to provide the translating movement perpendicular to said plane p1.

Moreover, as further illustrated in Figures 2A-3 (specifically Figures 2A-2B) the charge port cover arrangement 1 may comprise an auxiliary helix rod 12' and an auxiliary gear 13' diametrically opposite the helix rod 12 and the actuating unit 11 for providing structural stability to said charge port cover arrangement. Hence, the auxiliary helix rod 12' and auxiliary gear 13' may be passive components. It should be noted that the auxiliary gear 13' is not limited to being diametrically opposite the helix rod and may have other positions. Accordingly, whilst the helix rod 12 and the teeth 11a of the actuating unit 11 are directly part of, and driven by the actuating unit 11, the auxiliary helix rod 12' and auxiliary gear 13' may be passive components interacting with the gear 13 and the frame 20.

Further, Figure 3 illustrates that the plurality of charge port blades 2a-2d is four charge port blades 2a-2d each forming a quarter of a circle, wherein at said closed state the four charge port blades 2a-2d jointly form said common perimeter, said common perimeter being circular.

Figure 3 further illustrates that 1 each blade 2a, 2b, 2c, 2d may comprise a mating protrusion 25a and a mating cavity 25b. Accordingly at said closed state, each mating protrusion 25a of each blade 2a-2d is mated with a corresponding cavity 25b of another blade of said plurality of blades 2a-2d .

Figure 3 further illustrates that the gear 13 is connected to each of said plurality of charge port blades 2a, 2b, 2c, 2d. Further, the gear 13 is arranged to enable said transformation movement of the blades 2a, 2b, 2c, 2d by means of said linkages 15a-15d connected between the blades 2a-2d and the gear 13 and which guides the blades 2a-2d along the guiding tracks 21. The gear 13 may have a diameter that is equal to or greater than a diameter of said charge port blades 2a-2d when said charge port blades 2a-2d are in a closed state forming a common perimeter.

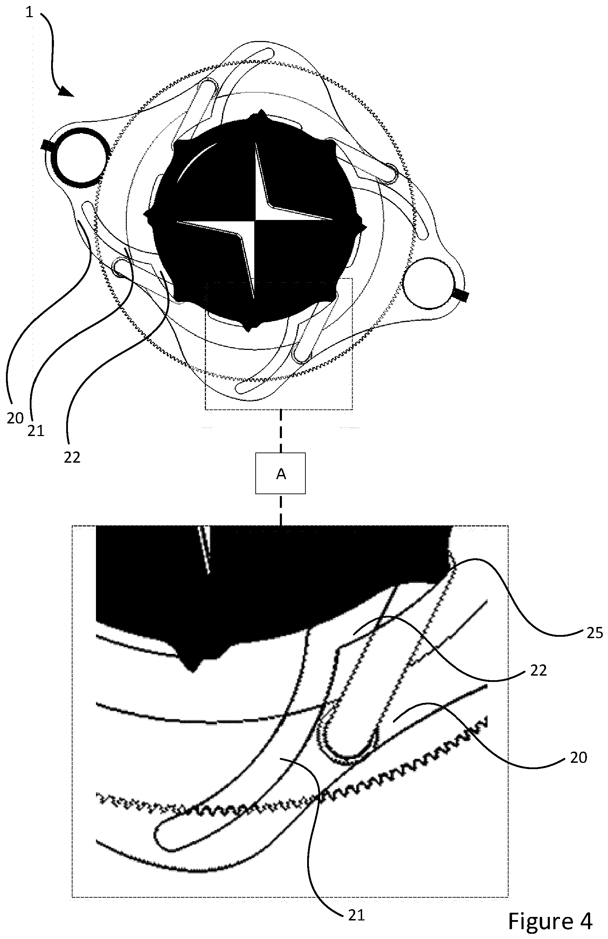

Figure 4 illustrates a front view of a charge port cover arrangement 1 in accordance with aspects herein while being in a closed state. Further, Figure 4 illustrates an enlarged view of a part of said charge port cover arrangement 1.

Figure 4 illustrates that the frame 20 comprises a plurality of neutral tracks 22. Each neutral track 22 extending into a corresponding guiding track 21 to form a common guiding track. Each neutral track 22 and each guiding track 21 form different paths. The neutral tracks 22 forming a neutral path that are jointly configured to rotate the common perimeter formed by blades 2a-2d in the closed state (while a translating movement is performed). Further, Figure 4 illustrates that each neutral track 22 extends along/in accordance with an outer perimeter of a corresponding charge port blade 2a, 2b, 2c, 2 when said charge port cover arrangement 1 is in said closed state, wherein each blade 2a, 2b, 2c, 2d (a track guiding portion 25 thereof) is arranged to, when alternating from a closed to an open state, be guided along a corresponding neutral track 22 to said guiding track 21, and when alternating from an open state to a closed state be guided from said guiding track 21 to said neutral track 22.

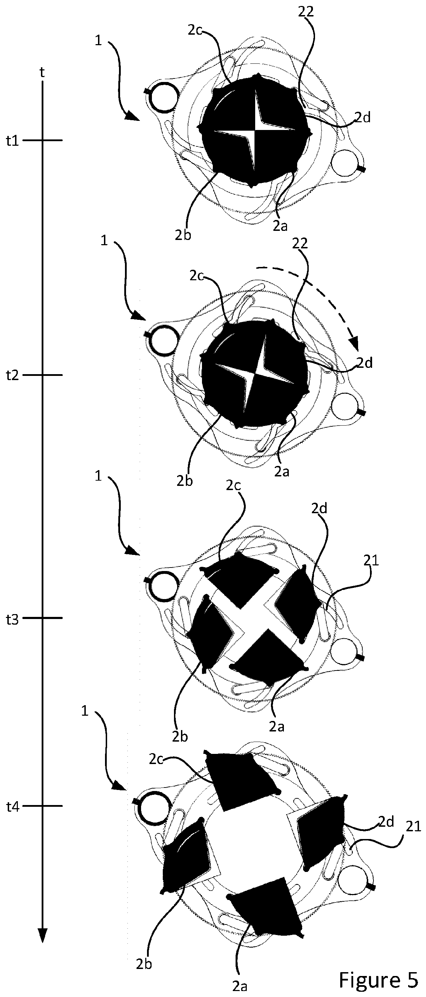

Figure 5 illustrates front views of a charge port cover arrangement 1 that performs an opening operation in which the charge port cover arrangement 1 is transitioning from a closed state to an open state during a time period (t1-t4). Figure 5 illustrates that from t1 to t2, each blade 2a-2d, in the closed state is moved along a corresponding neutral tracks 22 while performing the translating movement. Further, Figure 5 illustrates that during time t2-t4, each blade 2a-2d is guided by a corresponding guiding track 21 so to enable the blades 2a-2d to be guided away from each other.

As illustrated in Figure 5, when transitioning from said closed state to said open state, the transformation movement may be followed by the translating movement. Accordingly, when transitioning from said open state to said closed state, the translating movement may be followed by said transformation movement.

Figure 6 illustrates the charge port cover arrangement 1 of the present disclosure from an objective view in an opening operation. As further shown in Figure 6, the plurality of blades 2a-2d are, in said closed state at time point t1 flush with a vehicle exterior body 30. Further, Figure 6 illustrates that the charge port cover arrangement 1 from t1-t6 alternates from a closed state in which said charge port blades 2a, 2b, 2c, 2d form a common perimeter to an open state in which said charge port blades 2a, 2b, 2c, 2d expose said charge port opening of said vehicle to an environment.

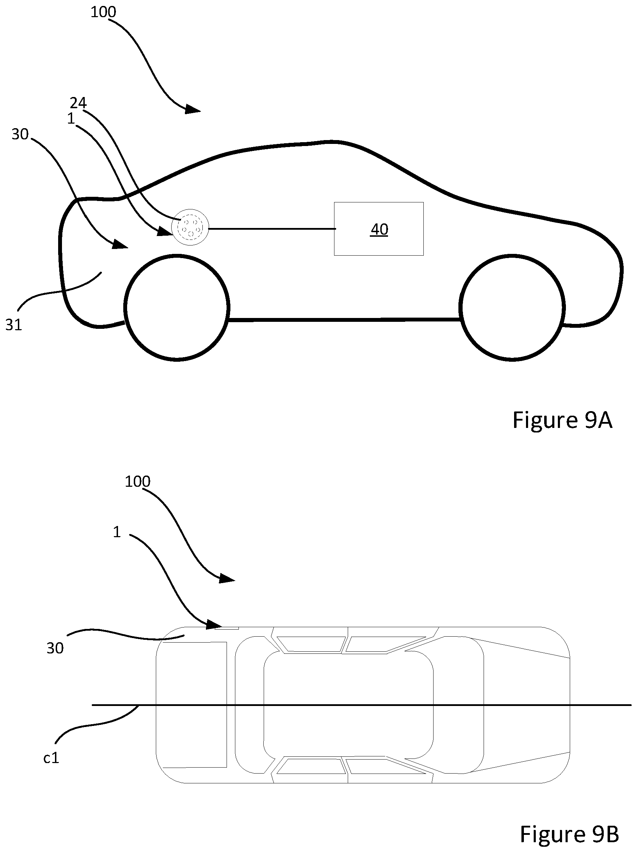

Specifically, Figure 6 illustrates that the charge port blades 2a-2d during time points t1-t3 are subjected to a translating movement such that they are moved inwardly towards a vehicle interior away from the exterior body 30. In Figure 6 the translating movement is (as shown in time points t4-t5) sequentially followed by a transformation movement in which the blades 2a-2d are moved away from each other such that they are adjacent a vehicle interior surface (not shown). Accordingly, the charge port cover arrangement 1 is arranged to move the blades 2a-2d inwardly towards a vehicle center line (see Figure 9b) prior to moving them away from each other.

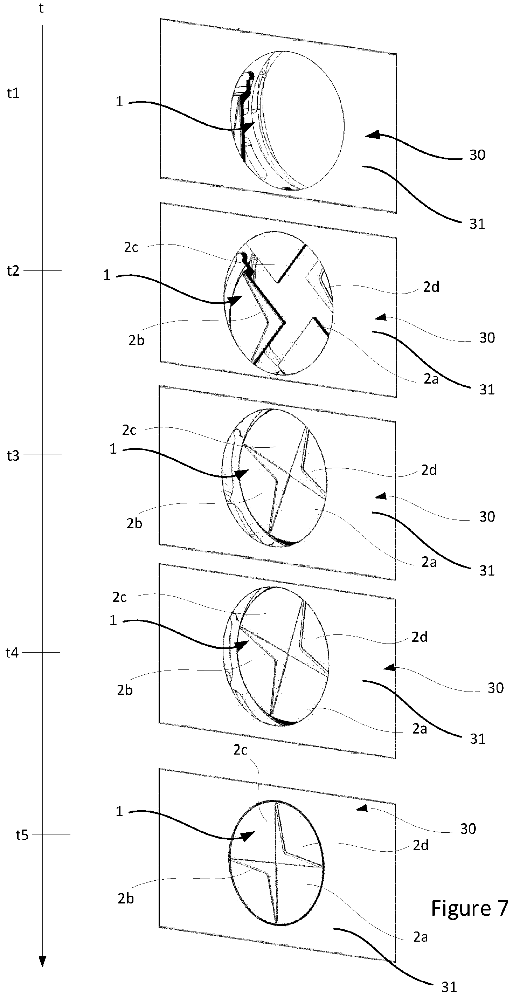

Figure 7 illustrates the charge port cover arrangement 1 of the present disclosure from an objective view in a closing operation. In Figure 7 the transformation movement is (as shown in time points t1-t2) sequentially followed by a translating movement in which the blades 2a-2d are moved towards the exterior body 30 to be flush with the exterior body 30. Accordingly, the charge port cover arrangement 1 in Figure 7 is arranged to move the blades 2a-2d outwardly towards the outer surface 31 of the exterior body 30 after moving them towards each other.

Figures 8A to 8C illustrate a side view of the charge port cover arrangement 1 according to aspects herein. Specifically, Figures 8A-8C illustrates the translating movement in accordance with aspects herein. As illustrated in Figures 8A-8C, the frame 20 is moved along the helix rod 12, thereby being moved inwardly along a first axisx1 away from the outer surface 31 of the vehicle exterior body 30. As illustrated in Figures 8A-8C the first axis x1 may extend in a first direction towards an interior of the vehicle In Figure 8A the charge port blades 2a-2d (only 2b and 2c are visible) are flush with the outer surface 31 of the vehicle exterior body 30 so to form a common plane with said outer surface 31 of the vehicle exterior body 30. In Figures 8B-8C the blades 2a-2d are moved inwardly away from said vehicle exterior body 30 realized by that the helix rod 12 moves the frame 20 along its guide means 12g. Accordingly, the blades 2a-2d are adjacent the inner surface 32 of the exterior body 30 on an opposite side of the outer surface 31. Referring to Figure 8A, Figure 8A illustrates that the actuating unit 11 may be arranged to cause the teeth 11a of its output shaft to rotate and the helix rod 12 to rotate simultaneously. It should be noted that in Figure 8A, the surface 30 is coincident with the first plane (even if the first plane is not explicitly illustrated in Figure 8A). Further, as illustrated in Figures 8A-8C the helix rod 12 may be operably coupled to a guide pin 12p which is configured to transmit torque of the helix rod to move the frame 20 along the first axis x1. Accordingly, the guide pin 12p may be configured to engage with said guide means 12g.

Figure 9A illustrates schematically a side view of a vehicle 100 in accordance with aspects herein. Figure 9A illustrates that the vehicle 100 comprises a charge port 24, an exterior body 30 defining a charge port opening extending to said charge port 24. Further, the exterior body 30 comprises an outer surface 31 and an inner surface 32 (not shown in Figure 9A, see Figure 8A-8C) on the opposite side of the outer surface 31. Further, the vehicle 100 comprises a charge port cover arrangement 1 according to any aspect herein. Figure 9A further illustrates that the charge port cover arrangement 1 may comprise control circuitry 40 configured to receive an opening or closing command, alternate, in response to said command, said charge port cover arrangement 1 from one of said states to the other. The control circuitry 40 may comprise one or more memory devices. Each memory device may comprise any form of volatile or non-volatile computer readable memory. The control circuitry 40 may further comprise input and output interfaces and one or more central processing units (CPUs), graphics processing units (GPUs), and/or other processing devices.

Figure 9B illustrates schematically a side view of a vehicle 100 in accordance with aspects herein. Figure 9B illustrates that the vehicle 100 comprises a center line c1. Accordingly, when said translating movement is performed in an opening operation, the blades 2a-2d of the charge port cover arrangement 1 move towards the vehicle center line c1. Accordingly, when said translating movement is performed in a closing operation, the blades of the charge port cover arrangement 1 move away from the vehicle center line c1.

## Claims

1. A charge port cover arrangement (1) for a vehicle comprising:
- a control assembly (10) comprising an actuation unit (11);
- a plurality of charge port blades (2a, 2b, 2c, 2d);
wherein the charge port cover arrangement (1) is arranged to alternate between a closed state in which said charge port blades (2a, 2b, 2c, 2d) form a common perimeter coincident with a first plane (p1), wherein the plurality of charge port blades (2a, 2b, 2c, 2d) are arranged to jointly cover a charge port opening of said vehicle, and an open state in which said charge port blades (2a, 2b, 2c, 2d) are arranged to expose said charge port opening of said vehicle to an environment;
wherein the control assembly (10) is operably coupled to the plurality of charge port blades (2a, 2b, 2c, 2d);
wherein when said control assembly (10) is configured to, in response to actuation of said actuation unit (11):
- move the plurality of blades (2a, 2b, 2c, 2d) from one of said states to the other state by a translating movement, and a transformation movement performed at least partly in a sequence, wherein said translating movement is arranged to move the charge port blades (2a, 2b, 2c, 2d) in a direction perpendicular to said first plane (p1), wherein said transformation movement moves the charge port blades (2a, 2b, 2c, 2d) away from each other or towards each other, the cover arrangement being **characterised in that** said control assembly comprises a helix rod (12) arranged to be rotated by said actuation unit (11) for enabling said translating movement, said helix rod (12) having an axial extension being parallel with a normal axis of said first plane (p1).

2. The charge port cover arrangement (1) according to claim 1, wherein said control assembly (11) comprises a gear (13) arranged to be driven by said actuation unit (11), the gear (13) being connected to each of said plurality of charge port blades (2a, 2b, 2c, 2d), wherein said gear (13) is arranged to enable said transformation movement of the blades (2a, 2b, 2c, 2d).

3. The charge port cover arrangement (1) according to any one of the preceding claims, wherein said control assembly (10) further comprises:
- a plurality of linkages (15a, 15b, 15c, 15d), each linkage being operably connected between a corresponding charge port blade (2a, 2b, 2c, 2d) of said plurality of charge port blades (2a, 2b, 2c, 2d) and said actuation unit (10), preferably each linkage (15a, 15b, 15c, 15d) is hingedly attached to said corresponding charge port blade (2a, 2b, 2c, 2d).

4. The charge port cover arrangement (1) according to claim 2 and 3, wherein each linkage (15a, 15b, 15c, 15d) is connected at one end to said gear (13) and at another end to a corresponding charge port blade (2a, 2b, 2c, 2d), thereby movement of the gear (13) causes the plurality of blades to move.

5. The charge port cover arrangement (1) according to any one of the preceding claims, wherein said control assembly comprises a frame (20) parallel to said first plane (p1), the frame (20) being connected to said plurality of blades (2a, 2b, 2c, 2d), the frame (20) defining an opening (23) arranged to be coaxial with said charge port opening, wherein the frame (20) comprises a plurality of guiding tracks (21) each guiding track (21) being arranged to guide a corresponding blade (2a, 2b, 2c, 2d) during said transformation movement to jointly move said blades (2a, 2b, 2c, 2d) away from or towards each other.

6. The charge port cover arrangement (1) according to claim 5, wherein said frame (20) is operably connected to said helix rod (12), wherein rotation of said helix rod (12) causes the frame to be driven along of said helix rod (12), thereby enabling said translating movement of said charge port blades (2a, 2b, 2c, 2d).

7. The charge port cover arrangement (1) according to any one of claims 5 or6, wherein each guiding track (21) is an arc shape and extends radially, away from said opening (23).

8. The charge port cover arrangement (1) according to any one of the claims 5-7, wherein said frame (20) comprises a plurality of neutral tracks (22), each neutral track extending into a corresponding guiding track (21),
wherein each neutral track (22) extends along an outer perimeter of a corresponding charge port blade (2a, 2b, 2c, 2d) when said charge port cover arrangement (1) is in said closed state, wherein each blade (2a, 2b, 2c, 2d) is arranged to, when alternating from a closed to an open state, be guided along a corresponding neutral track (22) to said first guiding track (21), and when alternating from an open state to a closed state be guided from said guiding track (21) to said neutral track (22).

9. The charge port cover arrangement (1) according to any one of the preceding claims, wherein the plurality of charge port blades (2a, 2b, 2c, 2d) is four charge port blades each forming a quarter of a circle, wherein at said closed state the four charge port blades (2a, 2b, 2c, 2d) jointly form said common perimeter, said common perimeter being circular.

10. The charge port cover arrangement (1) according to any one of the preceding claims, wherein each blade comprises a mating protrusion (25a) and a mating cavity (25b), wherein at said closed state, each mating protrusion (25a) of each blade is mated with a corresponding cavity (25b) of another blade of said plurality of blades.

11. The charge port cover arrangement (1) according to any one of the preceding claims, wherein the charge port cover arrangement (1) is arranged to, when transitioning from said closed state to said open state, perform the transformation movement after the translating movement, wherein when transitioning from said open state to said closed state, perform said translating movement after said transformation movement.

12. The charge port cover arrangement according to any one of the preceding claims, wherein the charge port cover arrangement (1) comprises control circuitry (40) configured to:
- receive an opening or closing command;
- alternate, in response to said command, said charge port cover arrangement (1) from one of said states to the other.

13. The charge port cover arrangement (1) according to any one of the preceding claims, wherein the plurality of blades (2a, 2b, 2c, 2d) are arranged to flush with a vehicle exterior body in said closed state.

14. A vehicle (100) comprising:
- a charge port (24);
- an exterior body (30) defining a charge port opening extending to said charge port (24), wherein the exterior body (30) comprises an outer surface (31) and an inner surface (32);
- the charge port cover arrangement (1) according to any one of the preceding claims;
wherein in said closed state, the plurality of blades (2a, 2b, 2c, 2d) are flush with said outer surface (31) of the exterior body (30),
wherein in said open state, the plurality of blades (2a, 2b, 2c, 2d) are adjacent said inner surface (32) of the exterior body (30).

## Patentansprüche

1. Ladeanschlussabdeckungsanordnung (1) für ein Fahrzeug, umfassend:
- eine Steuerbaugruppe (10), die eine Betätigungseinheit (11) umfasst;
- eine Vielzahl von Ladeanschlusskontaktmessern (2a, 2b, 2c, 2d);
wobei die Ladeanschlussabdeckungsanordnung (1) dazu ausgelegt ist, zwischen einem geschlossenen Zustand, in dem die Ladeanschlusskontaktmesser (2a, 2b, 2c, 2d) einen gemeinsamen Umfang bilden, der deckungsgleich mit einer ersten Ebene (p1) ist, wobei die Vielzahl von Ladeanschlusskontaktmessern (2a, 2b, 2c, 2d) angeordnet ist, um zusammen eine Ladeanschlussöffnung des Fahrzeugs abzudecken, und einem offenen Zustand, in dem die Ladeanschlusskontaktmesser (2a, 2b, 2c, 2d) angeordnet sind, um die Ladeanschlussöffnung des Fahrzeug gegenüber einer Umgebung freizulegen, zu wechseln;
wobei die Steuerbaugruppe (10) an die Vielzahl von Ladeanschlusskontaktmessern (2a, 2b, 2c, 2d) wirkgekoppelt ist; wobei, wenn die Steuerbaugruppe (10) als Reaktion auf eine Betätigung der Betätigungseinheit (11) zu Folgendem konfiguriert ist:
- Bewegen der Vielzahl von Kontaktmessern (2a, 2b, 2c, 2d) aus einem der Zustände in den anderen Zustand durch eine Verschiebebewegung und eine Umwandlungsbewegung, die mindestens teilweise in einer Abfolge durchgeführt werden, wobei die Verschiebebewegung dazu ausgelegt ist, die Ladeanschlusskontaktmesser (2a, 2b, 2c, 2d) in einer Richtung senkrecht zu der ersten Ebene (p1) zu bewegen, wobei die Umwandlungsbewegung die Ladeanschlusskontaktmesser (2a, 2b, 2c, 2d) voneinander weg oder aufeinander zu bewegt, wobei die Abdeckungsanordnung **dadurch gekennzeichnet ist, dass** die Steuerbaugruppe eine Gewindestange (12) umfasst, die dazu ausgelegt ist, durch die Betätigungseinheit (11) gedreht zu werden, um die Verschiebebewegung zu ermöglichen, wobei die Gewindestange (12) eine axiale Ausdehnung aufweist, die parallel zu einer normalen Achse der ersten Ebene (p1) ist.

2. Ladeanschlussabdeckungsanordnung (1) nach Anspruch 1, wobei die Steuerbaugruppe (11) ein Zahnrad (13) umfasst, das dazu ausgelegt ist, durch die Betätigungseinheit (11) angetrieben zu werden, wobei das Zahnrad (13) mit jedem der Vielzahl von Ladeanschlusskontaktmessern (2a, 2b, 2c, 2d) verbunden ist und wobei das Zahnrad (13) dazu ausgelegt ist, die Umwandlungsbewegung der Kontaktmesser (2a, 2b, 2c, 2d) zu ermöglichen.

3. Ladeanschlussabdeckungsanordnung (1) nach einem der vorhergehenden Ansprüche, wobei die Steuerbaugruppe (10) ferner Folgendes umfasst:
- eine Vielzahl von Verbindungen (15a, 15b, 15c, 15d), wobei jede Verbindung zwischen einem entsprechenden Ladeanschlusskontaktmesser (2a, 2b, 2c, 2d) der Vielzahl von Ladeanschlusskontaktmessern (2a, 2b, 2c, 2d) und der Betätigungseinheit (10) wirkverbunden ist, vorzugsweise wobei jede Verbindung (15a, 15b, 15c, 15d) gelenkig an das entsprechende Ladeanschlusskontaktmesser (2a, 2b, 2c, 2d) angebracht ist.

4. Ladeanschlussabdeckungsanordnung (1) nach Anspruch 2 und 3, wobei jede Verbindung (15a, 15b, 15c, 15d) an einem Ende mit dem Zahnrad (13) und an dem anderen Ende mit einem entsprechenden Ladeanschlusskontaktmesser (2a, 2b, 2c, 2d) verbunden ist, wodurch eine Bewegung des Zahnrads (13) bewirkt, dass sich die Vielzahl von Kontaktmessern bewegt.

5. Ladeanschlussabdeckungsanordnung (1) nach einem der vorhergehenden Ansprüche, wobei die Steuerbaugruppe einen Rahmen (20) parallel zu der ersten Ebene (p1) umfasst, der Rahmen (20) mit der Vielzahl von Kontaktmessern (2a, 2b, 2c, 2d) verbunden ist und der Rahmen (20) eine Öffnung (23) definiert, die angeordnet ist, um koaxial mit der Ladeanschlussöffnung zu sein, wobei der Rahmen (20) eine Vielzahl von Führungsschienen (21) umfasst und jede Führungsschiene (21) dazu ausgelegt ist, während der Umwandlungsbewegung ein entsprechendes Kontaktmesser (2a, 2b, 2c, 2d) zu führen, um die Kontaktmesser (2a, 2b, 2c, 2d) zusammen voneinander weg oder aufeinander zu zu bewegen.

6. Ladeanschlussabdeckungsanordnung (1) nach Anspruch 5, wobei der Rahmen (20) mit der Gewindestange (12) wirkverbunden ist und wobei eine Drehung der Gewindestange (12) bewirkt, dass der Rahmen entlang der Gewindestange (12) angetrieben wird, wodurch die Verschiebebewegung der Ladeanschlusskontaktmesser (2a, 2b, 2c, 2d) ermöglicht wird.

7. Ladeanschlussabdeckungsanordnung (1) nach einem der Ansprüche 5 oder6, wobei jede Führungsschiene (21) in einer Bogenform vorliegt und sich radial von der Öffnung (23) weg erstreckt.

8. Ladeanschlussabdeckungsanordnung (1) nach einem der Ansprüche 5-7, wobei der Rahmen (20) eine Vielzahl von neutralen Schienen (22) umfasst und sich jede neutrale Schiene in eine entsprechende Führungsschiene (21) erstreckt,
wobei sich jede neutrale Schiene (22) entlang eines äußeren Umfangs eines entsprechenden Ladeanschlusskontaktmessers (2a, 2b, 2c, 2d) erstreckt, wenn sich die Ladeanschlussabdeckungsanordnung (1) in dem geschlossenen Zustand befindet, wobei jedes Kontaktmesser (2a, 2b, 2c, 2d) dazu ausgelegt ist, beim Wechseln aus einem geschlossenen in einen offenen Zustand entlang einer entsprechenden neutralen Schiene (22) zu der ersten Führungsschiene (21) geführt zu werden und beim Wechseln aus einem offenen Zustand in einen geschlossenen Zustand aus der Führungsschiene (21) in die neutrale Schiene (22) geführt zu werden.

9. Ladeanschlussabdeckungsanordnung (1) nach einem der vorhergehenden Ansprüche, wobei die Vielzahl von Ladeanschlusskontaktmessern (2a, 2b, 2c, 2d) aus vier Ladeanschlusskontaktmessern besteht, die jeweils ein Viertel eines Kreises bilden, wobei die vier Ladeanschlusskontaktmesser (2a, 2b, 2c, 2d) in dem geschlossenen Zustand zusammen den gemeinsamen Umfang bilden und der gemeinsame Umfang kreisförmig ist.

10. Ladeanschlussabdeckungsanordnung (1) nach einem der vorhergehenden Ansprüche, wobei jedes Kontaktmesser einen Passvorsprung (25a) und einen Passhohlraum (25b) umfasst, wobei in dem geschlossenen Zustand jeder Passvorsprung (25a) jedes Kontaktmessers mit einem entsprechenden Hohlraum (25b) eines anderen Kontaktmessers der Vielzahl von Kontaktmessers gepaart wird.

11. Ladeanschlussabdeckungsanordnung (1) nach einem der vorhergehenden Ansprüche, wobei die Ladeanschlussabdeckungsanordnung (1) dazu ausgelegt ist, beim Übergehen aus dem geschlossenen Zustand in den offenen Zustand die Umwandlungsbewegung nach der Verschiebebewegung durchzuführen, wobei beim Übergehen aus dem offenen Zustand in den geschlossenen Zustand die Verschiebebewegung nach der Umwandlungsbewegung durchzuführen.

12. Ladeanschlussabdeckungsanordnung nach einem der vorhergehenden Ansprüche, wobei die Ladeanschlussabdeckungsanordnung (1) eine Steuerschaltung (40) umfasst, die zu Folgendem konfiguriert ist:
- Empfangen eines Öffnungs- oder Schließbefehls;
- Wechseln der Ladeanschlussabdeckungsanordnung (1) aus einem der Zustände in den anderen als Reaktion auf den Befehl.

13. Ladeanschlussabdeckungsanordnung (1) nach einem der vorhergehenden Ansprüche, wobei die Vielzahl von Kontaktmessern (2a, 2b, 2c, 2d) dazu angeordnet ist, in dem geschlossenen Zustand bündig mit einer Fahrzeugaußenkarosserie zu sein.

14. Fahrzeug (100), umfassend:
- einen Ladeanschluss (24);
- eine Außenkarosserie (30), die eine Ladeanschlussöffnung definiert, die sich zu dem Ladeanschluss (24) erstreckt, wobei die Außenkarosserie (30) eine äußere Fläche (31) und eine innere Fläche (32) umfasst;
- die Ladeanschlussabdeckungsanordnung (1) nach einem der vorhergehenden Ansprüche;
wobei in dem geschlossenem Zustand die Vielzahl von Kontaktmessern (2a, 2b, 2c, 2d) bündig mit der äußeren Fläche (31) der Fahrzeugaußenkarosserie (30) ist,
wobei in dem offenen Zustand sich die Vielzahl von Kontaktmessern (2a, 2b, 2c, 2d) benachbart zu der inneren Fläche (32) der Fahrzeugaußenkarosserie (30) befindet.

## Revendications

1. Agencement de couvercle de port de charge (1) pour un véhicule comprenant :
- un ensemble de commande (10) comprenant une unité d'actionnement (11) ;
- une pluralité de pales de port de charge (2a, 2b, 2c, 2d) ;
dans lequel l'agencement de couvercle de port de charge (1) est agencé pour alterner entre un état fermé dans lequel lesdites pales de port de charge (2a, 2b, 2c, 2d) forment un périmètre commun coïncidant avec un premier plan (p1), dans lequel la pluralité de pales de port de charge (2a, 2b, 2c, 2d) sont agencées pour recouvrir conjointement une ouverture de port de charge dudit véhicule, et un état ouvert dans lequel lesdites pales de port de charge (2a, 2b, 2c, 2d) sont agencées pour exposer ladite ouverture de port de charge dudit véhicule à un environnement ;
dans lequel l'ensemble de commande (10) est couplé de manière fonctionnelle à la pluralité de pales de port de charge (2a, 2b, 2c, 2d) ;
dans lequel, lorsque ledit ensemble de commande (10) est configuré pour, en réponse à l'actionnement de ladite unité d'actionnement (11) :
- déplacer la pluralité de pales (2a, 2b, 2c, 2d) de l'un desdits états à l'autre état par un mouvement de translation, et un mouvement de transformation réalisés au moins en partie selon une séquence, dans lequel ledit mouvement de translation est agencé pour déplacer les pales de port de charge (2a, 2b, 2c, 2d) dans une direction perpendiculaire audit premier plan (p1), dans lequel ledit mouvement de transformation déplace les pales de port de charge (2a, 2b, 2c, 2d) à l'opposé les unes des autres ou les unes vers les autres, l'agencement de couvercle étant **caractérisé en ce que** ledit ensemble de commande comprend une tige hélicoïdale (12) agencée pour être mise en rotation par ladite unité d'actionnement (11) pour permettre ledit mouvement de translation, ladite tige hélicoïdale (12) ayant une extension axiale qui est parallèle à un axe normal dudit premier plan (p1).

2. Agencement de couvercle de port de charge (1) selon la revendication 1, dans lequel ledit ensemble de commande (11) comprend un engrenage (13) agencé pour être entraîné par ladite unité d'actionnement (11), l'engrenage (13) étant raccordé à chacune de ladite pluralité de pales de port de charge (2a, 2b, 2c, 2d), dans lequel ledit engrenage (13) est agencé pour permettre ledit mouvement de transformation des pales (2a, 2b, 2c, 2d).

3. Agencement de couvercle de port de charge (1) selon l'une quelconque des revendications précédentes, dans lequel ledit ensemble de commande (10) comprend en outre :
- une pluralité de tringleries (15a, 15b, 15c, 15d), chaque tringlerie étant raccordée de manière fonctionnelle entre une pale de port de charge (2a, 2b, 2c, 2d) correspondante de ladite pluralité de pales de port de charge (2a, 2b, 2c, 2d) et ladite unité d'actionnement (10), de préférence chaque tringlerie (15a, 15b, 15c, 15d) est fixée de manière articulée à ladite pale de port de charge (2a, 2b, 2c, 2d) correspondante.

4. Agencement de couvercle de port de charge (1) selon les revendications 2 et 3, dans lequel chaque tringlerie (15a, 15b, 15c, 15d) est raccordée au niveau d'une extrémité audit engrenage (13) et au niveau d'une autre extrémité à une pale de port de charge (2a, 2b, 2c, 2d) correspondante, moyennant quoi le mouvement de l'engrenage (13) amène la pluralité de pales à se déplacer.

5. Agencement de couvercle de port de charge (1) selon l'une quelconque des revendications précédentes, dans lequel ledit ensemble de commande comprend un cadre (20) parallèle audit premier plan (p1), le cadre (20) étant raccordé à ladite pluralité de pales (2a, 2b, 2c, 2d), le cadre (20) définissant une ouverture (23) agencée pour être coaxiale avec ladite ouverture de port de charge, dans lequel le cadre (20) comprend une pluralité de pistes de guidage (21), chaque piste de guidage (21) étant agencée pour guider une pale (2a, 2b, 2c, 2d) correspondante pendant ledit mouvement de transformation pour déplacer conjointement lesdites pales (2a, 2b, 2c, 2d) à l'opposé les unes des autres ou les unes vers les autres.

6. Agencement de couvercle de port de charge (1) selon la revendication 5, dans lequel ledit cadre (20) est raccordé de manière fonctionnelle à ladite tige hélicoïdale (12), dans lequel la rotation de ladite tige hélicoïdale (12) amène le cadre à être entraîné le long de ladite tige hélicoïdale (12), permettant ainsi ledit mouvement de translation desdites pales de port de charge (2a, 2b, 2c, 2d).

7. Agencement de couvercle de port de charge (1) selon l'une quelconque des revendications 5 ou6, dans lequel chaque piste de guidage (21) est d'une forme d'arc et s'étend radialement, à l'opposé de ladite ouverture (23).

8. Agencement de couvercle de port de charge (1) selon l'une quelconque des revendications 5 à 7, dans lequel ledit cadre (20) comprend une pluralité de pistes neutres (22), chaque piste neutre s'étendant à l'intérieur d'une piste de guidage (21) correspondante,
dans lequel chaque piste neutre (22) s'étend le long d'un périmètre externe d'une pale de port de charge (2a, 2b, 2c, 2d) correspondante lorsque ledit agencement de couvercle de port de charge (1) est dans ledit état fermé, dans lequel chaque pale (2a, 2b, 2c, 2d) est agencée pour, lors de l'alternance d'un état fermé à un état ouvert, être guidée le long d'une piste neutre (22) correspondante vers ladite première piste de guidage (21), et lors de l'alternance d'un état ouvert à un état fermé, être guidée à partir de ladite piste de guidage (21) vers ladite piste neutre (22).

9. Agencement de couvercle de port de charge (1) selon l'une quelconque des revendications précédentes, dans lequel la pluralité de pales de port de charge (2a, 2b, 2c, 2d) sont quatre pales de port de charge formant chacune un quart de cercle, dans lequel, au niveau dudit état fermé, les quatre pales de port de charge (2a, 2b, 2c, 2d) forment conjointement ledit périmètre commun, ledit périmètre commun étant circulaire.

10. Agencement de couvercle de port de charge (1) selon l'une quelconque des revendications précédentes, dans lequel chaque pale comprend une saillie d'accouplement (25a) et une cavité d'accouplement (25b), dans lequel, au niveau dudit état fermé, chaque saillie d'accouplement (25a) de chaque pale est accouplée avec une cavité (25b) correspondante d'une autre pale de ladite pluralité de pales.

11. Agencement de couvercle de port de charge (1) selon l'une quelconque des revendications précédentes, dans lequel l'agencement de couvercle de port de charge (1) est agencé pour, lors de la transition dudit état fermé audit état ouvert, réaliser le mouvement de transformation après le mouvement de translation, dans lequel, lors de la transition dudit état ouvert audit état fermé, réaliser ledit mouvement de translation après ledit mouvement de transformation.

12. Agencement de couvercle de port de charge selon l'une quelconque des revendications précédentes, dans lequel l'agencement de couvercle de port de charge (1) comprend des circuits de commande (40) configurés pour :
- la réception d'une commande d'ouverture ou de fermeture ;
- l'alternance, en réponse à ladite commande, dudit agencement de couvercle de port de charge (1) de l'un desdits états à l'autre.

13. Agencement de couvercle de port de charge (1) selon l'une quelconque des revendications précédentes, dans lequel la pluralité de pales (2a, 2b, 2c, 2d) sont agencées pour affleurer une carrosserie extérieure de véhicule dans ledit état fermé.

14. Véhicule (100) comprenant :
- un port de charge (24) ;
- une carrosserie extérieure (30) définissant une ouverture de port de charge s'étendant vers ledit port de charge (24), dans lequel la carrosserie extérieure (30) comprend une surface externe (31) et une surface interne (32) ;
- l'agencement de couvercle de port de charge (1) selon l'une quelconque des revendications précédentes ;
dans lequel, dans ledit état fermé, la pluralité de pales (2a, 2b, 2c, 2d) affleurent ladite surface externe (31) de la carrosserie extérieure (30),
dans lequel, dans ledit état ouvert, la pluralité de pales (2a, 2b, 2c, 2d) sont adjacentes à ladite surface interne (32) de la carrosserie extérieure (30).
